# DEMANDE DE BREVET EUROPEEN

(11) **EP 0 537 035 A1**
(43) Date de publication de la demande: **14.04.1993**
(21) Numéro de dépôt: 92402257.7
(22) Date de dépôt: 07.08.1992
(51) Int. Cl.: F16C 3/02

(54) **Arbre de transmission à tube composite et son procédé de réalisation**

(30) Priorité: 09.10.1991 FR 9112440
(71) Demandeur: GKN GLAENZER SPICER, F-78955 Carrières-sous-Poissy (FR)
(72) Inventeur: Rouillot, Michel, F-78100 St. Germain en Laye (FR); Kovacs, Jean Michel, F-45120 Sepoy (FR)
(74) Mandataire: Polus, Camille

(57) **Abrégé**

L'invention propose un arbre de transmission, notamment de véhicule automobile, du type comportant un tube (12) en matériau synthétique renforcé de fibres et dont au moins une extrémité (10) est équipée d'un embout (14) comportant une portion intérieure (16) dont la section externe (18) est complémentaire de la section interne (20) de la portion d'extrémité (10) du tube (12) et qui est emmanchée à force dans cette dernière, caractérisé en ce qu'il est prévu des moyens complémentaires (30, 32) d'immobilisation axiale de l'embout (14) par rapport au tube (12) qui comportent un élément annulaire (30) associé à l'embout (14, 22) ou à la portion d'extrémité (10) du tube (12) et qui fait saillie radialement pour être reçu dans une gorge annulaire complémentaire (32) formée dans la portion d'extrémité (10) du tube (12) ou respectivement dans l'embout (14).

## Description

La présente invention concerne un arbre de transmission.

L'invention concerne plus particulièrement un arbre de transmission, notamment de véhicule automobile, appelé couramment arbre composite, c'est-à-dire un tube en matériau synthétique renforcé de fibres.

Les extrémités du tube composite sont en général chacune équipées d'un embout comportant une portion intérieure dont la section externe est complémentaire de la section interne de la portion d'extrémité du tube et qui est emmanchée à force dans cette dernière.

La liaison entre l'embout et le tube composite par emmanchement à force permet d'assurer de manière efficace et fiable la transmission du couple entre l'embout et le tube composite.

La longueur de la portion intérieure de l'embout emmanché à l'intérieur de la portion d'extrémité du tube est par exemple de 40 mm pour un diamètre intérieur du tube d'environ 80 mm. Lorsqu'un tel arbre de transmission est utilisé en position longitudinale sur un véhicule du type à propulsion ou à quatre roues motrices, il peut être nécessaire de s'assurer que l'embout ne puisse pas être déboîté du tube dans le cas où l'arbre de transmission serait soumis à des efforts de traction axiale inhabituels, résultant par exemple du blocage d'un composant complémentaire de la transmission tel qu'un joint coulissant, ou une coulisse à cannelures.

A cet effet, l'invention propose un arbre de transmission du type mentionné précédemment, caractérisé en ce qu'il est prévu des moyens complémentaires d'immobilisation axiale de l'embout par rapport au tube qui comportent un élément annulaire associé à l'embout ou à la portion d'extrémité du tube et qui fait saillie radialement pour être reçu dans une gorge annulaire complémentaire formée dans la portion d'extrémité du tube ou respectivement dans l'embout.

L'élément annulaire est par exemple constitué par un épaulement radial.

Selon un mode de réalisation préféré de l'invention, l'embout est du type comportant une bague extérieure dont la section interne est complémentaire de la section externe de la portion d'extrémité du tube et qui s'étend axialement en regard de la portion intérieure de l'embout, l'épaulement étant un épaulement radial interne formé à la surface interne de la bague extérieure de l'embout et qui est reçu dans une gorge annulaire complémentaire qui est formée dans la surface externe de la portion d'extrémité du tube.

Selon d'autres caractéristiques de l'invention :
- la gorge annulaire est formée à proximité du bord libre de la portion d'extrémité du tube ;
- l'épaulement radial comporte un chanfrein ;
- la bague extérieure de l'embout est réalisée sous la forme d'une pièce indépendante qui est immobilisée axialement par rapport à la portion intérieure de l'embout.

L'invention propose également un procédé de réalisation d'un arbre de transmission caractérisé en ce qu'il consiste à :
a) fabriquer un tube dont la surface externe de la portion d'extrémité comporte une gorge annulaire ;
b) fabriquer un embout comportant une portion intérieure complémentaire de la section interne du tube ;
c) fabriquer une bague extérieure dont la section interne est complémentaire de la section externe de la portion d'extrémité du tube et dont la surface interne comporte un épaulement radial interne ;
d) venir mettre en place la bague extérieure sur la portion d'extrémité du tube de manière que l'épaulement radial interne soit reçu dans la gorge annulaire ;
e) venir emmancher à force la portion intérieure de l'embout dans la portion d'extrémité du tube ; et
f) immobiliser axialement la bague extérieure par rapport à l'embout, par exemple en procédant au soudage de deux portions en vis-à-vis de la bague extérieure et de l'embout.

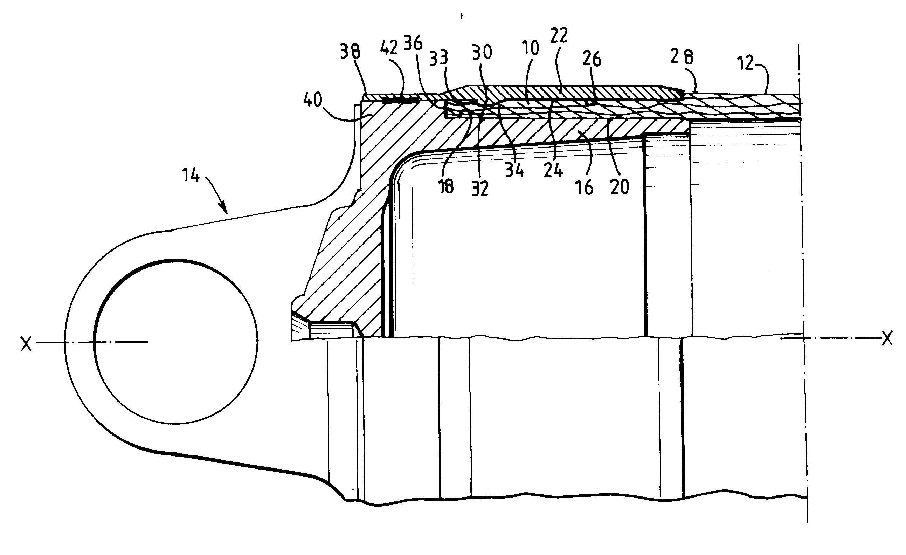

D'autres caractéristiques et avantages de l'invention apparaîtront à la lecture de la description détaillée qui va suivre pour la compréhension de laquelle on se reportera au dessin annexé dont la figure unique est une vue en coupe axiale partielle de l'extrémité d'un arbre de transmission réalisé conformément aux enseignements de l'invention.

On reconnaît sur la figure, la portion d'extrémité 10 d'un tube en matériau composite 12 qui constitue l'élément principal d'un arbre de transmission.

La portion d'extrémité 10 est équipée d'un embout 14 qui, dans le mode de réalisation illustré sur la figure, est un élément d'un joint de transmission articulé.

Selon une technique connue, l'embout 14 comporte une portion intérieure 16 dont la surface externe cylindrique 18 est montée par emmanchement à force selon la direction axiale X-X dans la portion cylindrique interne en vis-à-vis 20 de la portion d'extrémité 10 du tube composite 12.

Cette technique de liaison en rotation par emmanchement à force de deux surfaces cylindriques complémentaires permet d'assurer une transmission du couple entre l'embout 14 et le tube 12, la surface cylindrique externe 18 pouvant être lisse ou molletée.

Conformément à l'invention, il est prévu des moyens complémentaires pour immobiliser axialement l'embout 14 par rapport à la portion d'extrémité 10 du tube composite 12.

A cet effet, l'embout 14 comporte une bague extérieure complémentaire 22.

La bague 22 possède une surface interne cylindrique 24 qui est montée sur une portion cylindrique complémentaire 26 de la surface externe 28 de la portion d'extrémité 10 du tube composite 12.

La portée cylindrique 26 est réalisée par usinage de la surface externe 28.

Conformément à l'invention, la surface cylindrique interne 24 de la bague extérieure 22 comporte un épaulement radial 30 qui fait saillie radialement vers l'intérieur de la bague et qui est reçu dans une gorge complémentaire 32 usinée dans la portée cylindrique externe 24 de la portion d'extrémité 10 du tube composite 12.

L'épaulement 30 comporte un flanc radial 33 perpendiculaire à l'axe et, sur sa face opposée, un chanfrein 34 facilitant la mise en place de la bague extérieure 22 sur la portion d'extrémité 10 du tube composite 12.

Le profil de la gorge 32 est complémentaire de celui de l'épaulement 30.

La portion principale de la bague extérieure 22 qui s'étend axialement en regard de la portion intérieure 16 de l'embout 14 se prolonge axialement au-delà du bord libre d'extrémité 36 du tube 12 par un portion amincie 38 qui s'étend axialement en vis-à-vis d'une portion 40 de l'embout 14.

Dans le mode de réalisation illustré sur la figure, l'embout 14 et la bague extérieure 22 sont deux pièces métalliques qui sont immobilisées axialement l'une par rapport à l'autre au moyen d'une ou plusieurs soudures 42 réalisées entre les portions amincie 38 de la bague extérieure 22 et 40 de l'embout 14.

Le procédé de réalisation de l'arbre de transmission qui vient d'être décrit est le suivant.

Après avoir réalisé un tube en matériau composite 12 selon une technique connue, telle que par exemple par enroulement filamentaire, on vient usiner la surface externe de la portion d'extrémité 10 afin de réaliser la portée cylindrique 26 et la gorge 32.

On réalise un embout 14 avec sa portion intérieure 16 dont la surface cylindrique externe 20 est usinée et éventuellement molletée.

On réalise également la bague extérieure métallique 22 avec son épaulement radial interne 30.

Après avoir fabriqué indépendamment ces différents éléments, le processus d'assemblage est le suivant.

On commence par procéder à la mise en place de la bague extérieure 22 sur la portion d'extrémité 10 du tube composite 12.

Cette opération est facilitée par la présence du chanfrein 34. La mise en place se fait par introduction du bord libre 36 du tube 12 à l'intérieur de la bague extérieure 22 jusqu'à ce qu'il vienne coopérer avec le chanfrein 34, un effort de poussée supplémentaire étant alors appliqué aux deux éléments pour permettre, par déformation élastique temporaire radialement vers l'intérieur de la portion d'extrémité du tube composite 12, à l'épaulement 30 de pénétrer dans la gorge annulaire 32.

Il est à noter que le diamètre intérieur de la portion cylindrique 24 est légèrement supérieur au diamètre extérieur de la portion cylindrique 26 et que l'effort axial appliqué aux deux éléments lors de la mise en place de la bague 22 n'est dû qu'à la nécessité de faire pénétrer l'épaulement 30 dans la gorge 32.

Selon une technique connue, on vient ensuite emmancher à force la portion intérieure 16 de l'embout 14 dans la portion d'extrémité 10 du tube composite 12.

Il ne reste plus ensuite qu'à immobiliser axialement la bague extérieure 22 par rapport à l'embout 14 en réalisant par exemple des soudures 42.

On comprend alors aisément que l'embout 14 se trouve lié en rotation à la portion d'extrémité 10 du tube composite 12 du fait de l'emmanchement à force de sa portion intérieure 16, et qu'il se trouve immobilisé axialement par rapport à la portion d'extrémité 10 du fait de la coopération de l'épaulement radial interne 30 avec la gorge 32.

Selon d'autres variantes, non représentées, et dans lesquelles l'embout ne comporte pas de bague extérieure complémentaire, il est possible de réaliser l'épaulement radial sur la surface cylindrique externe de la portion intérieure de l'embout et la gorge annulaire dans la surface interne de la portion d'extrémité du tube composite.

Il est également possible de former deux portion de gorges complémentaires en vis-à-vis dans ces deux surfaces et d'y interposer un élément annulaire d'immobilisation réalisé par exemple sous la forme d'un anneau élastique ou d'un jonc déformable.

De même, dans le cas d'un mode de réalisation comportant une bague extérieure, l'immobilisation axiale de cette dernière par rapport à l'embout 14 peut être réalisée par tout moyen convenable tel que par exemple au moyen d'une goupille, par sertissage radial, ou par emboîtement élastique d'un épaulement radial interne de la bague intérieure 22 qui serait reçue dans une gorge complémentaire de la portion 40 du corps de l'embout 14.

## Revendications

1. Arbre de transmission, notamment de véhicule automobile, du type comportant un tube (12) en matériau synthétique renforcé de fibres et dont au moins une extrémité (10) est équipée d'un embout (14) comportant une portion intérieure (16) dont la section externe (18) est complémentaire de la section interne (20) de la portion d'extrémité (10) du tube (12) et qui est emmanchée à force dans cette dernière, caractérisé en ce qu'il est prévu des moyens complémentaires (30, 32) d'immobilisation axiale de l'embout (14) par rapport au tube (12) qui comportent un élément annulaire (30) associé à l'embout (14, 22) ou à la portion d'extrémité (10) du tube (12) et qui fait saillie radialement pour être reçu dans une gorge annulaire complémentaire (32) formée dans la portion d'extrémité (10) du tube (12) ou respectivement dans l'embout (14).

2. Arbre de transmission selon la revendication 1, caractérisé en ce que l'élément annulaire est un épaulement radial (30).

3. Arbre de transmission selon la revendication 2, caractérisé en ce que l'embout (14) comporte une bague extérieure (22) dont la section interne (24) est complémentaire de la section externe (26) de la portion d'extrémité (10) du tube et qui s'étend axialement en regard de la portion intérieure (16) de l'embout (14), en ce que ledit épaulement est un épaulement radial interne (30) formé à la surface interne (24) de la bague extérieure (22) de l'embout (14) et en ce que ladite gorge annulaire complémentaire (32) est formée dans la surface externe (26) de la portion d'extrémité (10) du tube (12).

4. Arbre de transmission selon la revendication 3, caractérisé en ce que la gorge annulaire (32) est formée à proximité du bord libre (36) de la portion d'extrémité (10) du tube (12).

5. Arbre de transmission selon l'une des revendications 3 ou 4, caractérisé en ce que ledit épaulement radial (30) comporte un chanfrein (34).

6. Arbre de transmission selon l'une quelconque des revendications 3 à 5, caractérisé en ce que la bague extérieure (22) de l'embout est réalisée sous la forme d'une pièce indépendante qui est immobilisée axialement (42) par rapport à la portion intérieure (16) de l'embout.

7. Procédé de réalisation d'un arbre de transmission selon la revendication 6, caractérisé en ce qu'il consiste à :
- a) fabriquer un tube (12) dont la surface externe (26) de la portion d'extrémité (12) comporte une gorge annulaire (32) ;
- b) fabriquer un embout (14) comportant une portion intérieure (16) complémentaire de la section interne de la portion d'extrémité du tube ;
- c) fabriquer une bague extérieure (22) dont la section interne est complémentaire de la section externe de la portion d'extrémité du tube et dont la surface interne (24) comporte un épaulement radial interne (30) ;
- d) venir mettre en place la bague extérieure (22) sur la portion d'extrémité (10) du tube de manière que l'épaulement radial interne (30) soit reçu dans la gorge annulaire (32) ;
- e) venir emmancher à force la portion intérieure (16) de l'embout (14) dans la portion d'extrémité du tube ; et
- f) immobiliser axialement la bague extérieure (22) par rapport à l'embout (14).

8. Procédé de réalisation selon la revendication précédente, caractérisé en ce que l'étape f) consiste à souder (42) deux portions en vis-à-vis (38, 40) de la bague extérieure (22) et de l'embout (14).
